# EUROPEAN PATENT APPLICATION

(11) **EP 4 167 163 A1**
(43) Date of publication of application: **19.04.2023**
(21) Application number: 22198284.6
(22) Date of filing: 28.09.2022
(51) Int. Cl.: G06Q 10/20, G06Q 10/063

(54) **PROCESS AND SYSTEM ARCHITECTURE FOR REPAIRING AND SERVICING VEHICLES**

(30) Priority: 14.10.2021 US 202117501443
(71) Applicant: Ford Global Technologies, LLC, Dearborn, MI 48126-2701 (US)
(72) Inventor: TJAHJADI, Glenny, Canton, 48188 (US); PITTERLING, Jens, 51515 Kuerten (DE); HALLIDAY, Nicholas James, Brentwood, CM145FZ (GB)
(74) Representative: Haseltine Lake Kempner LLP

(57) **Abstract**

Systems and methods are described for providing a process flow for attending to vehicles. A plurality of requests to attend to respective vehicles are received at a computing device, as is data indicating locations to attend to vehicles and a status of the locations. The status of the locations further comprises a resource allocation at each of the locations. For at least a subset of the requests to attend to respective vehicle and for each request in the subset, a number of actions are performed. A customer type associated with the request to attend to a vehicle is received at the computing device, as is data indicating a vehicle status. The requests to attend to respective vehicles, the locations, the status of the locations, the customer type and/or the vehicle status are structured in a database at the computing device. A report request, in a defined format, for at least a subset of the requests to attend to respective vehicles, the locations, the status of the locations, the customer type and/or the vehicle status is received at the computing device. A report based on the report request is generated.

## Description

### Technical Field

The disclosure relates to systems and methods for repairing and servicing vehicles.

### Background

The present disclosure relates to providing an infrastructure for collating data from numerous sources to enable improved systems and methods for repairing and servicing vehicles.

### Summary

When a vehicle is purchased from a manufacture dealership (or dealer), typically the vehicle will be taken back to a dealership in the manufacturer network of dealerships to be repaired and/or serviced. Repairing and/or servicing a vehicle at a dealership of a manufacture network of dealerships typically involves manually collecting data from numerous sources to ensure that any faults in the vehicle are captured, a suitable dealership in the network for receiving the vehicle is identified and any suitable equipment, parts and/or fluids for attending to the vehicle are available at the dealership.

One solution is to utilize a centrally located team of operators to aid the dealerships with the process. However, this may sill involve the operator having manually access multiple data from different sources and/or manually communicate with one or more dealerships in order to get the appropriate data to enable a servicing and/or repair process to be implemented, e.g., according to the specific technical requirements pertaining to the vehicle and/or one or more parameters associated with the owner/operator of the vehicle, such as location, timing, etc. Given the vast number of vehicles in service, managing the efficient allocation of resource for repairing and/or servicing those vehicles, e.g., between multiple parties, is technically challenging.

Systems and methods are provided herein for improving a process flow associated with repairing and/or servicing one or more vehicles. For example, the systems and methods provided herein provide a process flow for repairing and/or servicing vehicles, e.g., by simplifying and/or automating at least part of the process flow to enable the process to be carried out in a more efficient manner.

According to some examples of the systems and methods provided herein, a process flow for attending to vehicles is provided. A plurality of requests to attend to respective vehicles are received at a computing device, as is data, e.g., a plurality of data, indicating one or more locations (e.g., dealer locations) to attend to vehicles and a status of each dealer location. The status of the dealer locations comprises a resource allocation at each of the dealer locations. For at least a subset of the requests to attend to respective vehicles and for each request in the subset, a number of actions are performed. A customer type associated with each request to attend to a vehicle is received at the computing device, as is data indicating a vehicle status. The requests to attend to respective vehicles, the dealer locations, the status of the dealer locations, the customer type and/or the vehicle status are structured in a database at the computing device. A report request, in a defined format, for at least a subset of the requests to attend to respective vehicles, the dealer locations, the status of the dealer locations, the customer type and/or the vehicle status is received at the computing device. A report based on the report request is generated for display. In some examples, the report is generated for display. In some examples, a resource for attending to one or more vehicles is allocated. In some examples, a resource for attending to one or more vehicles is allocated automatically, e.g., without displaying the generated report. In some examples, attending to one or more of the respective vehicles occurs automatically, e.g., in response to a resource allocation.

In some examples, a database residing on a server receives a plurality of work orders relating to a plurality of vehicles. These work orders may indicate work that needs to be carried out on a vehicle, for example, a repair and/or a service. In addition, the database receives data regarding dealer locations and a resource allocation at each of the dealer locations. For example, GPS coordinates associated with each dealer location in a network of dealers is received. In addition, the resource allocation may include, for example, a number of technicians available to work on a vehicle, a number of free vehicle bays for working on a vehicle and/or a number of parts associated with a service and/or a repair. A customer type may be a fleet customer, a commercial customer and/or a retail customer. The customer type may be taken into account to prioritize the work done on a vehicle, for example, a self-employed commercial customer may not be able to attend jobs while their vehicle is being serviced, so it may be appropriate to prioritize that customer. In another example, if sub-set of a fleet of vehicles has a common problem, it may be indicated that other vehicles in the fleet need to be recalled in order to rectify the problem, e.g., before a repair is needed. Data indicating a status of the vehicle may include, for example, a type of service that a vehicle needs, an operational parameter of the vehicle (e.g., an engine temperature, an operational condition of a vehicle component, etc.), an operational parameter threshold (e.g., an engine temperature threshold, an operational threshold of a vehicle component, etc.), a fault associated with the vehicle, a vehicle model, a vehicle age and/or a vehicle color. The data indicating a status of a vehicle may be accessed from a database associating a vehicle status with a vehicle identification number (VIN). This data is received at the server and is collated, in a defined structure, in a single database. The database may be continually updated to reflect any changing in status of the aforementioned data, for example, on the completion of a vehicle service and/or repair. In other examples, status data may be cached, and the database may be updated at discrete intervals, for example, every 10 minutes. An operative may request a report in structured format, wherein the report comprises any of the aforementioned data and the operative may receive the report in response to the request. For example, an operative may log on to a computing device that is connected to a network, such as the internet, and may request a report via a web browser. The request may be transmitted via the network and, on receiving the request, the report may be generated at the server and transmitted, via the network, back to the computing device, where it is generated for display. In some examples, the report may be requested by another system, such as by a system of a third-party vehicle servicing and/repair service.

In some examples, customer data may be received, and a predictor model may be initiated at the computing device. The predictor model may determine a customer satisfaction associated with a dealer, a customer, a vehicle and/or a request to attend to a vehicle based, at least in part, on the customer data. A ranking may be assigned to a request to attend to a vehicle, based on the determined customer satisfaction. For example, if the predictor model determines that a customer has given bad (or low) feedback regarding an interaction with a dealer (and/or any other customer satisfaction criteria), then the ranking to attend to the vehicle may be increased. This may include, for example, prioritizing a repair and/or service for a customer who has previously given bad feedback, and/or prioritizing a repair and/or service for a vehicle having one or more reported problems.

In some examples, the data indicating the status of a vehicle may further comprises at least one of: a vehicle identification number, a vehicle model, a vehicle color and/or a vehicle registration.

In some examples, a request to assist a vehicle may be received at the computing device, wherein the request comprises vehicle location data. A dealer location for receiving and/or attending to the vehicle may be determined at the computing device (e.g., from the plurality of identified locations), wherein the determined dealer location may be based on the vehicle location data and the status of the dealer locations. For example, if a vehicle has broken down, location data may be used to identify the nearest dealer to take the vehicle to.

In some examples, an additional request to attend to a vehicle may be received at the computing device. The additional request to attend to a vehicle may be assigned to one of the identified dealer locations based on the dealer location status. The resource allocation at the dealer location may be updated in response to the assigning.

In some examples, the plurality of requests to attend to a vehicle may further comprise a plurality of requests to repair a vehicle. The requests to repair a vehicle may be ranked depending on the type of repair.

In some examples, the plurality of requests to attend to a vehicle may further comprise a plurality of requests to service a vehicle. The requests to service a vehicle may be ranked depending on the customer type.

In some examples, a rating associated with a dealer location and/or an operative at the dealer location may be received at the computing device. A vehicle may be assigned to a dealer location based on the rating.

In some examples, the request to attend to a vehicle may comprise a type of job. An issue with a vehicle may be diagnosed, e.g., based on one or more operational parameters of the vehicle (e.g., received from a vehicle). The request to attend to the vehicle may be updated to identify a type of job associated with the diagnosis. Subsequently, one or more actions may occur. An incorrect diagnosis associated with the vehicle may be identified. For example, one or more vehicle operational parameters received before a repair may be compared with one or more corresponding operational parameters received after the repair, to determine if the repair has been at least partially successful. Another, e.g., a correct, diagnosis associated with the vehicle may be identified, e.g., based on the comparison between operational parameters. The request to attend to the vehicle may be updated to identify a type of job based on the other diagnosis.

In some examples, a vehicle may be received at a dealer location. A first status associated with the vehicle may be identified. The database may be updated to identify the first status of the vehicle. The vehicle may be attended to. A second status associated with the attended to vehicle may be identified. The database may be updated to identify the second status of the vehicle, where the second status replaces the first status. In some examples, feedback associated with the vehicle may be received and a third status based on the received feedback may be identified. The database may be updated to identify the third status of the vehicle, where the third status may replace the second status. The vehicle status may indicate the status, e.g., status may indicate the progress of a repair job, either alone, or in combination with, one or more operational parameters of the vehicle.

In some examples, a vehicle may be attended to at a dealer location. The database may be updated with a status of the vehicle. The status of the vehicle may be transmitted, via a network, to a second computing device.

In some examples, a vehicle may be allocated to a dealer location. The vehicle may be attended to at the dealer location. It may be determined whether the attending to the vehicle at the dealer location corresponds with the request to attend to a vehicle, and an indication of the determination may be generated.

In some examples, in response to generating the report, a request to allocate a dealer location and/or a resource at a dealer location may be received.

In some examples, a customer type may be identified, wherein the type may comprise a single customer associated with a plurality of vehicles. A fault, e.g., that is common between multiple vehicles, may be identified, e.g., based on one or more generated reports and/or one or more operational parameters received from one or more vehicles. A message based on the fault may be generated, and the message may be transmitted to the customer. For example, the customer type may be a fleet customer, wherein the fleet customer has twenty vans, of the same/similar make, model and/or age. Based on receiving and attending to, for example, five vans at a dealer, it may be identified that the way the customer uses the vans has caused a part to wear prematurely. Based on this identification, a message may be generated and transmitted to the customer suggesting that, for example, they bring the remaining vans in the fleet to a dealer to repair the worn part, and/or suggest the way in which the vans are used.

It shall be appreciated that other features, aspects and variations of the present disclosure will be apparent from the disclosure of the drawings and detailed description. Additionally, it will be further appreciated that additional or alternative examples of methods of and systems for controlling an electrical accessory may be implemented within the principles set out by the present disclosure.

### Figures

The above and other objects and advantages of the disclosure will be apparent upon consideration of the following detailed description, taken in conjunction with the accompanying drawings, in which:
Figure 1 illustrates an example environment in which a vehicle interacts with a process flow for attending to vehicles, in accordance with some examples of the disclosure.
Figure 2 illustrates another example environment in which a vehicle interacts with a process flow for attending to vehicles, in accordance with some examples of the disclosure.
Figure 3 illustrates a schematic diagram of a process flow for attending to vehicles, in accordance with some examples of the disclosure.
Figure 4 illustrates another schematic diagram of a process flow for attending to vehicles, in accordance with some examples of the disclosure.
Figure 5 illustrates another schematic diagram of a process flow for attending to vehicles, in accordance with some examples of the disclosure.
Figure 6 illustrates an example flow chart of a process flow for attending to vehicles, in accordance with some examples of the disclosure.
Figure 7 illustrates another example flow chart of a process flow for attending to vehicles, in accordance with some examples of the disclosure.

### Detailed Description

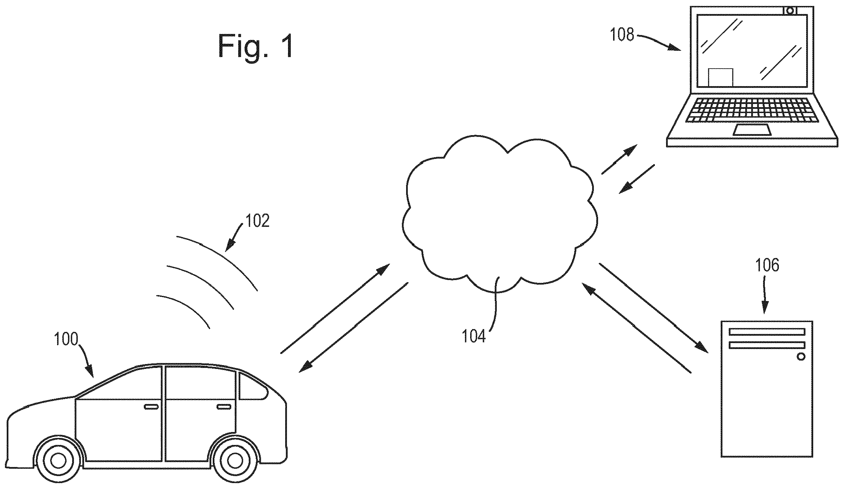

Figure 1 illustrates an example environment in which a vehicle interacts with a process flow for attending to vehicles, in accordance with some examples of the disclosure. A vehicle 100 comprises a transceiver for communicating 102 vehicle data via a network 104, for example, the internet, to a server 106. The network 104 may comprise wired and/or wireless means including, for example, a cellular network. In some examples, the vehicle 100 may comprise a subscriber identification module (SIM) card for communicating via the network and the SIM card may have a data plan associated with it. The vehicle data may include, for example, any errors (or issues) with the vehicle 100, (live and/or historical) operational parameters of the vehicle 100, when a next service is due, a vehicle identification number, a vehicle model, a vehicle color and/or a vehicle registration. The vehicle data is received at the server 106, where it is processed and added to a database. The server 106 also communicates, via the network 104, with one or more dealerships 108. The server 106 receives dealership data from the dealerships 108, which may include, for example, status data. The dealership status data may include, for example, a number of technicians available to work on a vehicle, a number of free vehicle bays for working on a vehicle and/or a number of parts associated with a service and/or a repair. The dealership data is received at the server 106, where it is processed and added to the database. Vehicle data may be transmitted from the server 106, via the network 104, to one or more dealerships 108. This data may be used by the dealership to indicate whether they are available to receive and attend to the vehicle 100 if it has a fault and/or requires a repair. In some examples, additionally or alternatively, dealership status data may be obtained by accessing, e.g., via network 104, and analyzing a dealership calendar, e.g., to determine the ability of the dealership to perform a repair and/or service, within a certain period. Dealership data may be transmitted from the server 106, via the network 104, to the vehicle 100. For example, if the vehicle 100 has a fault, data indicating that the vehicle 100 may be taken to a specific dealership 108 may be transmitted to the vehicle 100.

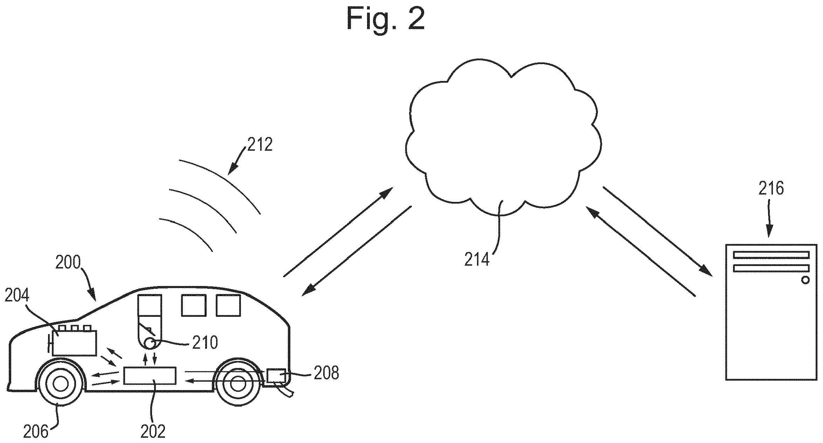

Figure 2 illustrates an example environment in which a vehicle interacts with a process flow for attending to vehicles, in accordance with some examples of the disclosure. A vehicle 200 comprises a vehicle controller 202 and number of different vehicle components 204, 206, 208, 210, each comprising one or more sensors that are in communication with the vehicle controller via, for example, a vehicle controller area network (CAN). In this example, the components include the vehicle 200 engine 204, tires 206, exhaust system 208 and window lowering mechanism 210; however, any component of the vehicle may have an associated sensor that is in communication with the vehicle controller 202. The vehicle controller 202 communicates with a transceiver that communicates 212 vehicle data via a network 214, for example, the internet, to a server 216. The network may comprise wired and/or wireless means including, for example, a cellular network. In some examples, the vehicle 200 may comprise a subscriber identification module (SIM) card for communicating via the network and the SIM card may have a data plan associated with it. The vehicle data may include, for example, any errors (or issues) with the vehicle 200, when a next service is due, a vehicle identification number, a vehicle model, a vehicle color and/or a vehicle registration. The vehicle data is received at the server 206, where it is processed and added to a database.

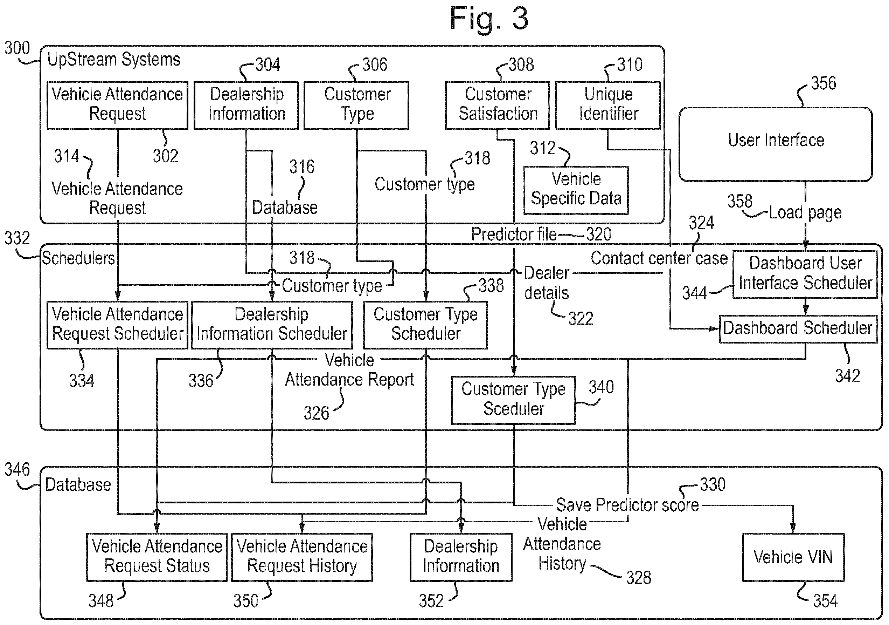

Figure 3 illustrates a schematic diagram of a process flow for attending to vehicles, in accordance with some examples of the disclosure. The system comprises upstream systems 300, schedulers 332 and a database 346. The upstream systems 300, schedulers 332 and database 346 may run on different physical servers, the same physical server, one or more virtual servers running on the same, or different, physical servers and/or any combination of physical and/or virtual servers. The upstream systems 300 collect data and include systems to collect vehicle attendance request 302 data that, in some examples, could be a work order for a vehicle repair or service. The upstream systems 300 also include systems to collect dealership information 304 data, customer type 306 data, customer satisfaction 308 data, generate a unique identifier 310 for each record and collect vehicle specific 312 data. The schedulers 332 update the database 346 with the upstream data 300. The vehicle attendance request data 314 and customer type data 318 is collected by the vehicle attendance request scheduler 334 to update the vehicle attendance request status 348 and vehicle attendance request history 350 components of the database 346. The database 346 may comprise a single table or, in other examples, may comprise separate tables. The dealership information scheduler 336 collects dealership information data 316 and updates the dealership information 352 component of the database 346. The customer type scheduler 338 collects the customer type data 318 and also updates the vehicle attendance request status 348 and vehicle attendance request history 350 components of the database 346. The predictor model scheduler 340 collects the customer satisfaction data and updates the vehicle attendance request status 348 and the vehicle VIN 354 components of the database with the predictor score 330. When a user inputs vehicle information via a user interface 356, a web page is loaded 358 and the dashboard user interface scheduler 344 and the dashboard scheduler 342 receive dealer detail data 322 and contact center case data 324 and update the vehicle attendance request status 348 and the vehicle attendance request history 350 components of the database with the vehicle attendance report 326 and the vehicle attendance history 328. In this way, the systems 300, schedulers 332 and database 346 interface to allow a custom report can be generated via a web-based user interface page and request customer data via a report with a defined structure.

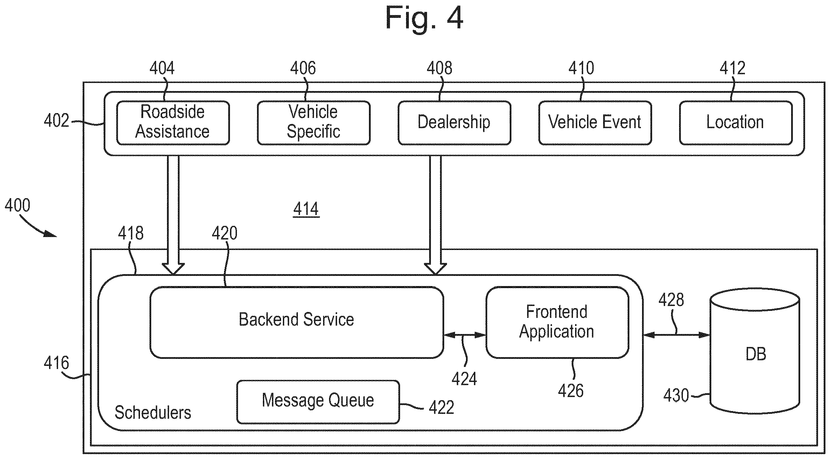

Figure 4 illustrates another schematic diagram of a process flow for attending to vehicles, in accordance with some examples of the disclosure. A system 400 comprises an upstream component 402 and a scheduling and database component 416. The upstream component 402 comprises a roadside assistance component 404, a vehicle specific component 406, a dealership component 408, a vehicle event component 410 and a location component 412. The components 402, 404, 406, 408, 410 may run on different physical servers, the same physical server, one or more virtual servers running on the same, or different, physical servers and/or any combination of physical and/or virtual servers. The roadside assistance component 404 may, for example, receive roadside assistance data from a roadside assistance system, which may include vehicle VIN data, vehicle driver information, vehicle condition (e.g., which may be determined based on one or more received vehicle parameters), and/or vehicle location data. The vehicle specific component 406 may supply vehicle specific information based on the vehicle VIN. The dealership component 408 may include GPS coordinates associated with each dealer location in a network of dealers is received. In addition, dealership component 408 may include a number of technicians available to work on a vehicle, a number of free vehicle bays for working on a vehicle and/or a number of parts associated with a service and/or a repair. The vehicle event component 410 may provide diagnostic data associated with a vehicle and may be identified via the vehicle VIN, for example. The location component 412 may be used to retrieve dealer locations, based on vehicle location data received via the roadside assistance component 404. A queue management system 414, such as message-broker software, may be used to manage data flows from the upstream component 402 to the schedulers 418. The schedulers comprise a backend service 420, a message queue management component 422 and a frontend application 426. The schedulers 418 communicate the data from the upstream components 402 to the database 430.

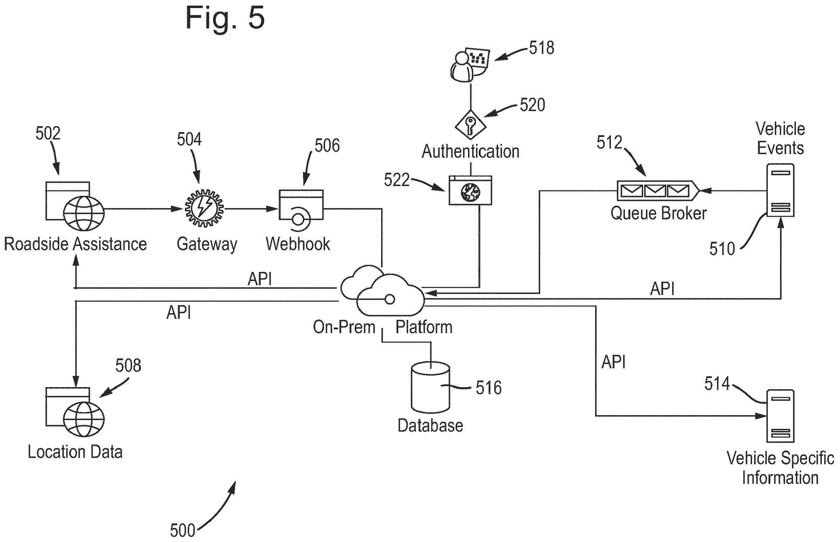

Figure 5 illustrates another schematic diagram of a process flow for attending to vehicles, in accordance with some examples of the disclosure. The system 500 comprises a roadside assistance module 502, a location data module 508, a vehicle events module 510 and a vehicle specific information module 514. The modules 502, 508, 510, 514 may run on different physical servers, the same physical server, one or more virtual servers running on the same, or different, physical servers and/or any combination of physical and/or virtual servers. The roadside assistance component 502 may, for example, receive roadside assistance data from the roadside assistance system, which may include vehicle VIN data, vehicle driver information and/or vehicle location data. The roadside assistance system may post roadside assistance data to a webhook 506. The system 500 may also comprise a gateway 504 to enable third party organizations, such as a roadside assistance system, to post data to other components of the system 500. The data may be received in, for example, a JavaScript object notation (JSON) format. An API may be utilized to transmit updated information to and from the roadside assistance module 502, via, for example, a representational state transfer application programming interface (REST API) supporting JSON and extensible markup language (XML) content types. The location data module 508 may retrieve dealer information by parsing, for example, GPS co-ordinates provided via the vehicle roadside assistance module 502. The vehicle events module 510 provides diagnostic event data and may push data via a queue manger 512, e.g., using message-broker software. Vehicle events data can also be requested via, for example, a REST API in a JSON format. The vehicle specific information module 514 may provide vehicle specific information based on a vehicle VIN via, for example, and XML based simple object access protocol (SOAP) API. The data from the different modules 502, 508, 510, 514 is stored and retrieved from a database 516. A user may access the database 516 via a computing device 518 and authenticating 520 themselves via web-based portal 522.

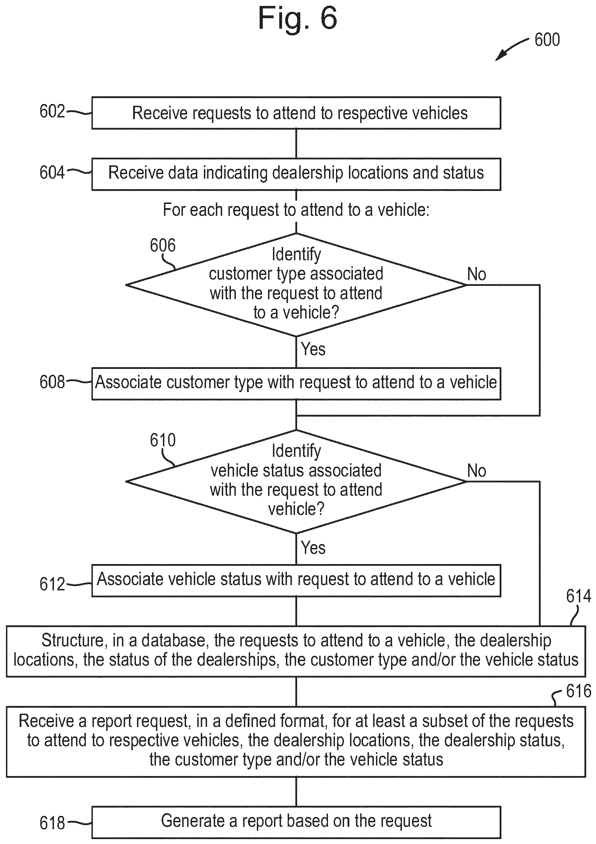

Figure 6 illustrates an example flow chart of a process flow for attending to vehicles, in accordance with some examples of the disclosure. Process 600 may run on a computing device, such as the aforementioned servers. At 602, a request is received to attend to a vehicle. This may, for example, be a work order requesting a vehicle repair and/or service. At 604, data indicating dealership locations and/or status is received and, for each request to attend to a vehicle, it is determined whether a customer type associated with the request to attend to a vehicle can be identified 606. If a customer type can be identified, at 608 a customer type is associated with the request to attend to a vehicle, and the process proceeds to 610. If a customer type cannot be identified, then the process proceeds to 610, where it is determined whether a vehicle status associated with the request to attend to the vehicle can be identified. If the vehicle status can be identified, at 612, the vehicle status is associated with the request to attend to a vehicle, and the process proceeds to 614. If the vehicle status cannot be identified, the process processed to 614, where the requests to attend to a vehicle, the dealership locations, the status of the dealerships, the customer type and/or the vehicle status is structured in a database, at a server. At 616, a report request, in a defined format, for at least a subset of the requests to attend to a vehicle, the dealership locations, the dealership status, the customer type and/or the vehicle status is received, and at 618 a report, based on the request, is generated.

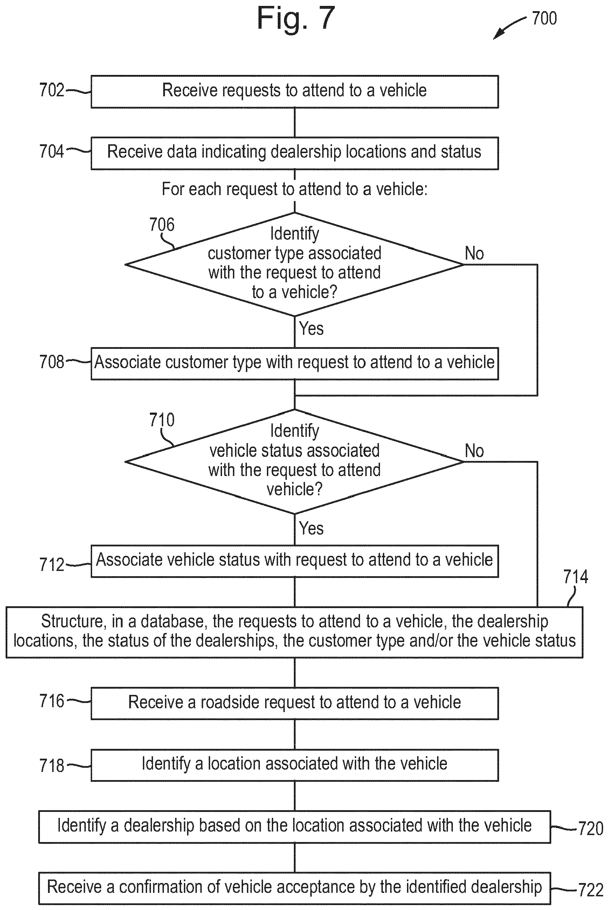

Figure 7 illustrates another example flow chart of a process flow for attending to vehicles, in accordance with some examples of the disclosure. Process 700 may run on a computing device, such as the aforementioned servers. At 702, a request is received to attend to a vehicle. This may, for example, be a work order requesting a vehicle repair and/or service. At 704, data indicating dealership locations and/or status is received and, for each request to attend to a vehicle, it is determined whether a customer type associated with the request to attend to a vehicle can be identified 706. If a customer type can be identified, at 708 a customer type is associated with the request to attend to a vehicle, and the process proceeds to 710. If a customer type cannot be identified, then the process proceeds to 710, where it is determined whether a vehicle status associated with the request to attend to the vehicle can be identified. If the vehicle status can be identified, at 712, the vehicle status is associated with the request to attend to a vehicle, and the process proceeds to 714. If the vehicle status cannot be identified, the process processed to 714, where the requests to attend to a vehicle, the dealership locations, the status of the dealerships, the customer type and/or the vehicle status is structured in a database, at a server. At 716, a roadside request to attend to a vehicle is received, and at 718 a location associated with the vehicle to identified. At 720, a dealership is identified based on a location associated with the vehicle, and at 722, a confirmation of vehicle acceptance by the identified dealership is received.

This disclosure is made for the purpose of illustrating the general principles of the systems and processes discussed above and are intended to be illustrative rather than limiting. More generally, the above description is meant to be exemplary and not limiting and the scope of the disclosure is best determined by reference to the appended claims. In other words, only the claims that follow are meant to set bounds as to what the present disclosure includes.

While the present disclosure is described with reference to particular example applications, it will be appreciated that the disclosure is not limited hereto and that particular combinations of the various features described and defined in any aspects can be implemented and/or supplied and/or used independently. It will be apparent to those skilled in the art that various modifications and improvements may be made without departing from the scope and spirit of the present disclosure. Those skilled in the art would appreciate that the actions of the processes discussed herein may be omitted, modified, combined, and/or rearranged, and any additional actions may be performed without departing from the scope of the disclosure.

Any system features as described herein may also be provided as a method feature and vice versa. As used herein, means plus function features may be expressed alternatively in terms of their corresponding structure. It shall be further appreciated that the systems and/or methods described above may be applied to, or used in accordance with, other systems and/or methods.

Any feature in one aspect may be applied to other aspects, in any appropriate combination. In particular, method aspects may be applied to system aspects, and vice versa. Furthermore, any, some and/or all features in one aspect can be applied to any, some and/or all features in any other aspect, in any appropriate combination.

According to the present invention, a method of attending to vehicles, includes: receiving, at a computing device, a plurality of requests to attend to respective vehicles; receiving, at the computing device, data indicating locations to attend to vehicles and a status of the locations, wherein the status of the locations comprises a resource allocation at each of the locations; for at least a subset of the requests to attend to respective vehicles and for each request in the subset: receiving, at the computing device, a customer type associated with each request to attend to a vehicle; and receiving, at the computing device, data indicating a vehicle status; structuring, in a database at the computing device, the requests to attend to respective vehicles, the locations, the status of the locations, the customer type and/or the vehicle status; receiving, at the computing device, a report request, in a defined format, for at least a subset of the requests to attend to respective vehicles, the locations, the status of the locations, the customer type and/or the vehicle status; and generating a report based on the report request.

In one aspect of the invention, the method further comprises: receiving customer data; initiating, at the computing device, a predictor model, wherein the predictor model determines a customer satisfaction associated with a request to attend to a vehicle based, at least in part, on the customer data; and assigning a ranking to a request to attend to a vehicle based on the determined customer satisfaction.

In one aspect of the invention, the data indicating the vehicle status further comprises at least one of: a vehicle identification number, a vehicle model, a vehicle color, an operational parameter of the vehicle and/or a vehicle registration.

In one aspect of the invention, the method further comprises: receiving, at the computing device, a request to assist a vehicle, wherein the request comprises vehicle location data; and determining, at the computing device, a location for attending to the vehicle, wherein the determined location is based on the vehicle location data and the status of the locations.

In one aspect of the invention, the method further comprises: receiving, at the computing device, an additional request to attend to a vehicle; assigning, based on the location status, the additional request to one of the identified locations for attending to a vehicle; and in response to the assigning, updating the resource allocation at the location.

In one aspect of the invention: the plurality of requests to attend to respective vehicles further comprises a plurality of requests to repair respective vehicles; and the method further comprises: ranking the requests to repair respective vehicles depending on the type of repair.

In one aspect of the invention: the plurality of requests to attend to respective vehicles further comprises a plurality of requests to service respective vehicles; and the method further comprises: ranking the requests to service respective vehicles depending on the customer type.

In one aspect of the invention, the method further comprises: receiving, at the computing device, a rating associated with a location and/or an operative at the location; and assigning a vehicle to one of the identified locations for attending to a vehicle based on the rating.

In one aspect of the invention, the request to attend to a vehicle comprises a type of job, the method further comprising: diagnosing an issue with a vehicle; updating the request to attend to the vehicle to identify a type of job associated with the diagnosis; and, subsequently: identifying an incorrect diagnosis associated with the vehicle; identifying a correct diagnosis associated with the vehicle; and updating the request to attend to the vehicle to identify a type of job based on the correct diagnosis.

In one aspect of the invention, the method further comprises: receiving a vehicle at a location; identifying a first status associated with the vehicle; updating the database to identify the first status of the vehicle; attending to the vehicle; identifying a second status associated with the attended to vehicle; and updating the database to identify the second status of the vehicle, wherein the second status replaces the first status.

In one aspect of the invention, the method further comprises: receiving feedback associated with the vehicle; identifying a third status based on the received feedback; and updating database to identify the third status of the vehicle, wherein the third status replaces the second status.

In one aspect of the invention, the method further comprises: attending to a vehicle at a location; updating the database with a vehicle status; transmitting, via a network, the vehicle status to a second computing device.

In one aspect of the invention, the method further comprises: allocating a vehicle to a location; attending to the vehicle at the location; determining whether the attending to the vehicle at the location corresponds with the request to attend to a vehicle; and generating an indication of the determination.

In one aspect of the invention, in response to generating the report, receiving a request to allocate a location and/or a resource at a location.

In one aspect of the invention, the method further comprises: identifying a customer type, wherein the type comprises a single customer associated with a plurality of vehicles; identifying a common fault with the plurality of vehicles; generating a message based on the common fault; and transmitting the message to the single customer and/or one or more of the identified locations.

According to an embodiment, the invention is further characterized by: a wireless transceiver; a memory for storing computer readable instructions; and a vehicle controller configured to communicate with the computing device.

According to the present invention, a system for attending to vehicles, is provided having: a communication port; a memory storing instructions; and control circuitry communicably coupled to the memory and the communication port and configured to execute instructions to: receive, at a computing device, a plurality of requests to attend to respective vehicles; receive, at the computing device, data indicating locations to attend to vehicles and a status of the locations, wherein the status of the locations further comprises a resource allocation at each of the locations; for at least a subset of the requests to attend to respective vehicles and for each request in the subset: receive, at the computing device, a customer type associated with the request to attend to a vehicle; and receive, at the computing device, data indicating a vehicle status; structure, in a database at the computing device, the requests to attend to respective vehicles, the locations, the status of the locations, the customer type and/or the vehicle status; receive, at the computing device, a report request, in a defined format, for at least a subset of the requests to attend to respective vehicles, the locations, the status of the dealer locations, the customer type and/or the vehicle status; and generate a report based on the report request.

According to the present invention, a non-transitory, computer-readable medium is provided having non-transitory, computer-readable instructions encoded thereon for attending to vehicles that, when executed by control circuitry cause the control circuitry to: receive, at a computing device, a plurality of requests to attend to respective vehicles; receive, at the computing device, data indicating locations to attend to vehicles and a status of the locations, wherein the status of the locations comprises a resource allocation at each of the locations; for at least a subset of the requests to attend to respective vehicles and for each request in the subset: receive, at the computing device, a customer type associated with each request to attend to a vehicle; and receive, at the computing device, data indicating a vehicle status; structure, in a database at the computing device, the requests to attend to respective vehicles, the locations, the status of the locations, the customer type and/or the vehicle status; receive, at the computing device, a report request, in a defined format, for at least a subset of the requests to attend to respective vehicles, the locations, the status of the dealer locations, the customer type and/or the vehicle status; and generate a report based on the report request.

## Claims

1. A method of attending to vehicles, the method comprising:
receiving, at a computing device, a plurality of requests to attend to respective vehicles;
receiving, at the computing device, data indicating locations to attend to vehicles and a status of the locations, wherein the status of the locations comprises a resource allocation at each of the locations;
for at least a subset of the requests to attend to respective vehicles and for each request in the subset:
receiving, at the computing device, a customer type associated with each request to attend to a vehicle; and
receiving, at the computing device, data indicating a vehicle status;
structuring, in a database at the computing device, the requests to attend to respective vehicles, the locations, the status of the locations, the customer type and/or the vehicle status;
receiving, at the computing device, a report request, in a defined format, for at least a subset of the requests to attend to respective vehicles, the locations, the status of the locations, the customer type and/or the vehicle status; and
generating a report based on the report request.

2. The method of claim 1, wherein the method further comprises:
receiving customer data;
initiating, at the computing device, a predictor model, wherein the predictor model determines a customer satisfaction associated with a request to attend to a vehicle based, at least in part, on the customer data; and
assigning a ranking to a request to attend to a vehicle based on the determined customer satisfaction.

3. The method of claims 1 or 2, wherein the data indicating the vehicle status further comprises at least one of: a vehicle identification number, a vehicle model, a vehicle color, an operational parameter of the vehicle and/or a vehicle registration.

4. The method of any previous claims, wherein the method further comprises:
receiving, at the computing device, a request to assist a vehicle, wherein the request comprises vehicle location data; and
determining, at the computing device, a location for attending to the vehicle, wherein the determined location is based on the vehicle location data and the status of the locations; and/or
receiving, at the computing device, an additional request to attend to a vehicle;
assigning, based on the location status, the additional request to one of the identified locations for attending to a vehicle; and
in response to the assigning, updating the resource allocation at the location.

5. The method of any previous claims, wherein:
the plurality of requests to attend to respective vehicles further comprises a plurality of requests to repair respective vehicles; and the method further comprises:
ranking the requests to repair respective vehicles depending on the type of repair; and/or
the plurality of requests to attend to respective vehicles further comprises a plurality of requests to service respective vehicles; and the method further comprises:
ranking the requests to service respective vehicles depending on the customer type.

6. The method of any previous claims, wherein the method further comprises:
receiving, at the computing device, a rating associated with a location and/or an operative at the location; and
assigning a vehicle to one of the identified locations for attending to a vehicle based on the rating.

7. The method of any previous claims, wherein the request to attend to a vehicle comprises a type of job, the method further comprising:
diagnosing an issue with a vehicle;
updating the request to attend to the vehicle to identify a type of job associated with the diagnosis; and, subsequently:
identifying an incorrect diagnosis associated with the vehicle;
identifying a correct diagnosis associated with the vehicle; and
updating the request to attend to the vehicle to identify a type of job based on the correct diagnosis.

8. The method of any previous claims, wherein the method further comprises:
receiving a vehicle at a location;
identifying a first status associated with the vehicle;
updating the database to identify the first status of the vehicle;
attending to the vehicle;
identifying a second status associated with the attended to vehicle; and
updating the database to identify the second status of the vehicle, wherein the second status replaces the first status; and optionally:
receiving feedback associated with the vehicle;
identifying a third status based on the received feedback; and
updating database to identify the third status of the vehicle, wherein the third status replaces the second status.

9. The method of any previous claims, wherein the method further comprises:
attending to a vehicle at a location;
updating the database with a vehicle status;
transmitting, via a network, the vehicle status to a second computing device.

10. The method of any previous claims, wherein the method further comprises:
allocating a vehicle to a location;
attending to the vehicle at the location;
determining whether the attending to the vehicle at the location corresponds with the request to attend to a vehicle; and
generating an indication of the determination.

11. The method of any previous claims, wherein, in response to generating the report, receiving a request to allocate a location and/or a resource at a location.

12. The method of any previous claims, wherein the method further comprises:
identifying a customer type, wherein the type comprises a single customer associated with a plurality of vehicles;
identifying a common fault with the plurality of vehicles;
generating a message based on the common fault; and
transmitting the message to the single customer and/or one or more of the identified locations.

13. A vehicle for use with the method of any previous claim, the vehicle comprising:
a wireless transceiver;
a memory for storing computer readable instructions; and
a vehicle controller configured to communicate with the computing device.

14. A system for attending to vehicles, the system comprising:
a communication port;
a memory storing instructions; and
control circuitry communicably coupled to the memory and the communication port and configured to execute instructions to:
receive, at a computing device, a plurality of requests to attend to respective vehicles;
receive, at the computing device, data indicating locations to attend to vehicles and a status of the locations, wherein the status of the locations further comprises a resource allocation at each of the locations;
for at least a subset of the requests to attend to respective vehicles and for each request in the subset:
receive, at the computing device, a customer type associated with the request to attend to a vehicle; and
receive, at the computing device, data indicating a vehicle status;
structure, in a database at the computing device, the requests to attend to respective vehicles, the locations, the status of the locations, the customer type and/or the vehicle status;
receive, at the computing device, a report request, in a defined format, for at least a subset of the requests to attend to respective vehicles, the locations, the status of the dealer locations, the customer type and/or the vehicle status; and
generate a report based on the report request.

15. A non-transitory, computer-readable medium having non-transitory, computer-readable instructions encoded thereon for attending to vehicles that, when executed by control circuitry cause the control circuitry to:
receive, at a computing device, a plurality of requests to attend to respective vehicles;
receive, at the computing device, data indicating locations to attend to vehicles and a status of the locations, wherein the status of the locations comprises a resource allocation at each of the locations;
for at least a subset of the requests to attend to respective vehicles and for each request in the subset:
receive, at the computing device, a customer type associated with each request to attend to a vehicle; and
receive, at the computing device, data indicating a vehicle status;
structure, in a database at the computing device, the requests to attend to respective vehicles, the locations, the status of the locations, the customer type and/or the vehicle status;
receive, at the computing device, a report request, in a defined format, for at least a subset of the requests to attend to respective vehicles, the locations, the status of the dealer locations, the customer type and/or the vehicle status; and
generate a report based on the report request.
